(19) Europäisches Patentamt
European Patent Office
Office européen des brevets

(11) EP 2 436 817 B1

# (12) EUROPEAN PATENT SPECIFICATION

(45) Date of publication and mention of the grant of the patent:
**19.11.2014 Bulletin 2014/47**

(51) Int Cl.:
***D05B 19/02*** *(2006.01)* ***G06Q 90/00*** *(2006.01)*

(21) Application number: **11183221.8**

(22) Date of filing: **29.09.2011**

(54) **Work analyzing apparatus in cooperating system of a plurality of sewing machines**

Arbeitsanalysevorrichtung und zusammenarbeitendes System aus mehreren Nähmaschinen

Appareil d'analyse du fonctionnement dans un système coopératif d'une pluralité de machines à coudre

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2010 CN 201010298829**

(43) Date of publication of application:
**04.04.2012 Bulletin 2012/14**

(73) Proprietor: **JUKI Corporation**
**Tama-shi**
**Tokyo**
**206-8551 (JP)**

(72) Inventors:
- **Ueta, Masahiko**
  **Tokyo, Tokyo 206-8551 (JP)**
- **Hara, Satomi**
  **Tokyo, Tokyo 206-8551 (JP)**

(74) Representative: **Hoeger, Stellrecht & Partner**
**Patentanwälte**
**Uhlandstrasse 14c**
**70182 Stuttgart (DE)**

(56) References cited:
**EP-A2- 0 160 317**
**DE-A1-102008 064 516**
**JP-A- 2006 314 517**
**US-A- 4 956 783**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a work analyzing apparatus in a cooperating system of a plurality of sewing machines in which a plurality of sewing machines cooperates with each other to constitute a sewing line. More specifically, the invention relates to a technique for enhancing cooperation efficiency in a cooperating system of a plurality of sewing machines, thereby improving an efficiency of a sewing line.

[Background Art]

A sewing factory has a large number of sewing machines provided therein, and each of the sewing machines is operated by each operator. In the sewing factory, usually, a single workpiece (for example, a suit of clothes) is fabricated by a cooperation of the sewing machines with each other. More specifically, a single workpiece is completed sequentially via a sewing line constituted by the sewing machines of different sewing types. Moreover, an identical sewing machine executes different sewing processes in some cases.

In the sewing factory, thus, the workpiece is fabricated through the cooperation of the plural sewing machines, that is, the plural operators. In order to enhance production efficiency, therefore, it is very important to analyze a work of each operator and to form a proper sewing line depending on a result of the analysis.

For the related art, as disclosed in Patent Document 1, there is proposed a work analyzing apparatus of a sewing machine which analyzes sewing work result data of each sewing machine and displays, as a pitch diagram, a work balance of a sewing line constituted by a plurality of sewing machines in the sewing line, for example.

The pitch diagram is obtained by receiving a time (a pitch time) required for a sewing operation every operator (or every sewing machine) from result data on a sewing work and displaying the time in a graph. A manager can improve a work balance by seeing the graph to check a balance of a sewing work time allocated to each operator and finding a sewing process (a so-called bottleneck process) having the longest sewing work time, and changing an assignment of the sewing process. For example, the manager improves the balance of the sewing work by assigning a single sewing process having a long sewing work time to be held concurrently by plural operators.

In the sewing line, thus, a sewing operation related to a suit of clothes is divided into fine sewing processes and they are distributed to the respective operators (sewing machines). In order to arrange the work balance, usually, the sewing process is distributed in such a manner that a single operator takes charge of plural sewing processes. In order to create a pitch diagram in the case that the single operator takes charge of the sewing processes, it is necessary to calculate a pitch time for each sewing process, and furthermore, to calculate a time (a pitch time) required for the sewing operation of each operator in consideration of a rate at which the sewing process is allocated to any operator.

With reference to Figs. 1 and 2, a specific example of a pitch diagram will be described.

> Fig. 1 shows an example of a sewing line. A work balance is to be arranged or a difficult process is to be allocated to a skilled operator. For this reason, the sewing line is formed by concurrently holding plural processes through a single sewing machine (an operator) or allocating a single process to plural sewing machines. In the example of Fig. 1, for instance, a sewing machine 1 concurrently holds processes <1> and <2>. Moreover, a process <5> is allocated to sewing machines 2 and 3, for example.
> Fig. 2 shows a method of creating a pitch diagram.

An operator of the sewing machine 1 carries out a sewing work of the process <1> in a pitch time of 100 seconds and carries out a sewing work of the process <2> in a pitch time of 120 seconds. Moreover, the sewing work of the process <1> is allocated to the sewing machine 1 (the operator of the sewing machine 1) at a rate of 100 % and the sewing work of the process <2> is allocated thereto at a rate of 100 %. In this case, in the sewing machine 1 (the operator of the sewing machine 1), there is obtained a regular work time = 100 seconds X 100 % + 120 seconds X 100 % = 220 seconds.

Furthermore, an operator of the sewing machine 2 carries out a sewing work of a process <3> in a pitch time of 50 seconds, carries out a sewing work of a process <4> in a pitch time of 80 seconds, and caries out a sewing work of the process <5> in a pitch time of 180 seconds. Moreover, the sewing work of the process <3> is allocated to the sewing machine 2 (the operator of the sewing machine 2) at a rate of 100 %, the sewing work of the process <4> is allocated thereto at a rate of 100 %, and the sewing work of the process <5> is allocated thereto at a rate of 30 %. In this case, in the sewing machine 2 (the operator of the sewing machine 2), there is obtained a regular work time = 50 seconds X 100 % + 80 seconds X 100 % + 180 seconds X 30 % = 184 seconds.

Referring to the sewing machines 3 to 8 (operators of the sewing machines 3 to 8), similarly, a regular work time is obtained from a pitch time and a rate of a sewing work which is allocated. In the case that an identical process (the process <6>) is held by the sewing machines in parallel as in the sewing machines 4 and 5, the regular work time is averaged and expressed in a graph.

Fig. 3 shows an example in which a pitch diagram is displayed in a line graph form. From the pitch diagram of Fig. 3, it is apparent that the regular work times of the sewing machines 1 and 6 are longer than those of the other sewing machines. This implies that the sewing work concentrates on the specific sewing machines 1 and 6 (the operators of the sewing machines 1 and 6) and a sewing work efficiency of the whole sewing line is influenced strongly by the concentrating sewing machines and is thus reduced. Accordingly, the manager improves a balance of the sewing work to enhance the sewing work efficiency of the whole sewing line by allocating a part of the sewing works of the sewing machines 1 and 6 (the operators of the sewing machines 1 and 6) to the sewing machine 3 having a short regular work time, for example.

[Patent Document 1] JP-A-2009-160084 Publication

In order to create a pitch diagram in the work analyzing apparatus according to the related art, it is necessary to input a process ID for identifying any sewing process to be carried out by any of the sewing machines. It is necessary to input the process ID from each sewing machine when an operator of the sewing machine is to carry out a sewing work.

In the case that a single operator takes charge of plural sewing processes, it is necessary to input the process ID every time a work process is varied. For this reason, there is a possibility that work efficiency might be reduced or a pitch diagram might become wrong due to an erroneous input.

Moreover, it is usually necessary to determine a process ID of each work process after dividing the work process and to then input the process ID from each sewing machine. However, it is necessary to newly determine the process ID every time a product is changed or an allocation of a sewing process to a sewing machine is varied. For this reason, a management is complicated, and furthermore, an operator might input an erroneous process ID. In case of various and small lot products, the problem is caused remarkably.

[SUMMARY OF THE INVENTION]

The present invention provides a work analyzing apparatus in a cooperating system of a plurality of sewing machines which can classify a sewing process to be carried out by each sewing machine through an effective utilization of a signal output from the sewing machine.

According to an aspect of the invention, a work analyzing apparatus in a cooperating system of a plurality of sewing machines includes: a thread cutting information receiving portion connected to a plurality of sewing machines to receive, from each of the plurality of sewing machines, thread cutting information indicating that thread cutting is carried out by the respective sewing machines; a stitch length receiving portion connected to the sewing machines to receive, from the respective sewing machines, information about a stitch length of a sewing carried out by the respective sewing machines; an in-process stitch length information creating portion for creating in-process stitch length information to be information about a stitch length in a single process from thread cutting to next thread cutting of the respective sewing machines based on the stitch length information and the thread cutting information; and a process determining portion for classifying a sewing process carried out by the respective sewing machines based on the received in-process stitch length information.

[Advantages of the Invention]

According to the invention, the sewing process to be carried out by each of the sewing machines is classified based on the information about the in-process stitch length of the sewing machine. Therefore, it is possible to precisely and easily classify a sewing process to be carried out by each of the sewing machines through an effective utilization of a signal output from the sewing machine.

[BRIEF DESCRIPTION OF THE DRAWINGS]

The following description of a preferred embodiment of the present invention serves to explain the invention in greater detail in conjoint with the drawings. These show:

Fig. 1 is a view showing an example of a sewing line;
Fig. 2 is a view for explaining a method of creating a pitch diagram;
Fig. 3 is a chart showing an example in which the pitch diagram is displayed in a line graph form;
Fig. 4 is a chart showing a relationship between the number of sewing stitches and the number of sewing operations in the case that three sewing processes A, B and C are carried out;
Fig. 5 is a diagram showing a relationship among a pitch time, thread cutting and a content of a work to be carried out in the pitch time;

Fig. 6 is a view showing a whole configuration of a cooperating system of a plurality of sewing machines according to an embodiment;

Fig. 7 is a view showing a schematic configuration of a sewing machine;

Fig. 8 is a block diagram showing a structure of a work analyzing apparatus of a sewing machine according to the embodiment;

Fig. 9 is a table showing an example of data to be input to a work analyzing apparatus from each of sewing machines;

Fig. 10A is a chart showing an image of a way for classifying a sewing process based on the number of in-process stitches, and Figs. 10B, 10C and 10D are charts showing an image of a method of obtaining a pitch time;

Fig. 11 is a table showing data obtained after classifying a sewing process based on the number of in-process stitches, and furthermore, receiving the pitch time;

Fig. 12 is a table showing an example in which the sewing process is classified based on a sewing type;

Fig. 13 is a table showing an example in which the sewing process is classified based on data of the number of stitches;

Fig. 14 is a table showing an example in which the sewing process is classified based on a process ID for a manager;

Fig. 15 is a table showing an example of a method of determining a rate;

Fig. 16 is a table showing an example of the method of determining a rate;

Fig. 17 is a table showing an example of a display in the case that a manual input of a manager is required;

Figs. 18A and 18B are table showing an example of the display in the case that the manual input of the manager is required, Fig. 18A being a table showing an example of a display after a process ID is input, and Fig. 18B being a table showing an example of a display after a rate is defined; and

Fig. 19 is a chart showing an example of a pitch diagram to be created.

[Mode for Carrying Out the Invention]

[1] Principle

Before explanation of an embodiment according to the invention, a principle of the invention will be described.

The inventors of the invention first paid attention to the fact that stitch lengths are almost equal to each other for a period from thread cutting to next thread cutting (the period is defined to be "a pitch time" in the embodiment) in identical sewing processes. The inventors supposed that the sewing process can be classified based on the stitch length and reached the invention.

The invention has a feature that information about the stitch length for the period (the pitch time) from the thread cutting to the next thread cutting in sewing data obtained from each sewing machine is collected from the sewing machine and the sewing process to be carried out by the sewing machine is classified based on the information about the stitch length in the sewing machine. Consequently, the sewing process can be classified even if a process ID for classifying the sewing process is not input when a sewing work is to be carried out.

Each sewing machine usually outputs stitch number information indicative of the number of stitches which are formed. Therefore, it is suitable that a stitch length in a pitch time of each sewing machine should be received by effectively utilizing the stitch number information. In this connection, the stitch length in the pitch time can easily be obtained in accordance with the following equation (1).

$$\text{Stitch length} = \text{The number of stitches in pitch time} \times \text{Stitch length per stitch} \quad \ldots (1)$$

In other words, the stitch length per stitch represents a pitch length of a seam over a workpiece. The stitch length per stitch is a fixed length which is determined in each sewing machine. By storing the length, therefore, it is possible to obtain the stitch length from the number of stitches in accordance with the equation (1). In subsequent description, the number of stitches in the pitch time will also be referred to as "the number of in-process stitches" for convenience.

The stitch length and the number of stitches have a one-to-one relationship. Therefore, it is also possible to exactly use the number of stitches as an index for determining a process without obtaining the stitch length. Moreover, the stitch length may be obtained based on separate data from the number of stitches. For example, it is possible to obtain the stitch length by providing a sensor for detecting a quantity of feed of a workpiece in a sewing machine and calculating a quantity of feed of the workpiece in the pitch time based on a detection signal sent from the sensor. Furthermore, a sewing machine is provided with a sensor for detecting a quantity of consumption of a thread and the quantity of consumption of the thread in the pitch time is obtained based on a detection signal sent from the sensor, and the stitch length can be received based on the quantity of consumption of the thread, for example. The stitch length and the quantity of consumption of the thread have a one-to-one relationship in the same manner as the relationship between the stitch length and the number of stitches. Therefore, it is also possible to exactly use the quantity of consumption of the thread as the index for determining a process without obtaining the stitch length.

The pitch time represents a period from thread cutting to next thread cutting in a sewing work. A thread cutting signal is usually output from the sewing machine. The thread cutting signal is output from the sewing machine when the sewing thread is cut. By obtaining a period from an input of a certain thread cutting signal to an input of a next thread cutting signal, it is possible to receive the pitch time. It is suitable to utilize a thread cutting signal which is automatically output from the sewing machine interlockingly with a thread cutting operation of the sewing machine. In case of a sewing machine having no function for automatically outputting the thread cutting signal interlockingly with the thread cutting operation, however, it is preferable to utilize a signal to be output through a switch operation by an operator in the thread cutting.

The number of stitches represents the number of times that a needle is moved upward, downward and upward in this order. When the needle carries out a single reciprocation upward, downward and upward in this order, a single seam is formed. Therefore, the number of stitches may also be referred to as the number of seams. The number of stitches can be obtained based on information about a rotation of a motor for driving a needle, for example. The number of stitches in the pitch time will be hereinafter referred to simply as the number of stitches in some cases.

The number of sewing operations represents the number of times that a continuous seam set to each sewing process is formed by a sewing machine and corresponds to the number of the sewn workpieces. Therefore, the number of sewing operations may be referred to as the number of sewn cloths for each sewing process. An operation from certain thread cutting to next thread cutting indicates a single sewing work, and a single workpiece is thus obtained. Accordingly, it is possible to receive the number of sewing operations (the number of sewn cloths) by counting the number of thread cutting signals.

Fig. 4 shows, as an example, a relationship between the number of in-process stitches and the number of sewing operations in the case that three sewing processes A, B and C are carried out by means of a single sewing machine. For example, the sewing process A indicates a process of sewing a pocket, the sewing process B indicates a process of sewing a sleeve, and the sewing process C indicates a process of sewing a collar. In the example of Fig. 4, 100 cloths are subjected to the sewing process A having 70 stitches, 60 cloths are subjected to the sewing process B having 100 stitches, and 30 cloths are subjected to the sewing process C having the 200 stitches.

As is apparent from Fig. 4, the number of in-process stitches is equal if the sewing process is identical, and the number of in-process stitches is different if the sewing process is different. Accordingly, it is possible to classify the sewing process by using the number of in-process stitches.

In Fig. 4, the sewing operation is carried out at several times with 30 stitches, 40 stitches, 150 stitches and 170 stitches. There is a high possibility that a sewing work corresponding to the number of in-process stitches in the small number of sewing operations (or the small number of sewn cloths) might be a mending work (a re-sewing work). In other words, the mending work is an irregular work. Therefore, the number of sewing operations with the number of in-process stitches is decreased. By determining a threshold of the number of sewing operations for each of the number of in-process stitches, setting, as a normal process, the sewing process with the number of in-process stitches which is equal to or greater than the threshold and setting, as the mending process, the sewing process with the number of in-process stitches which is smaller than the threshold, accordingly, it is also possible to distinguish the normal process from the mending process.

Fig. 5 shows a relationship among a pitch time, thread cutting and a content of a work to be carried out in the pitch time.

As shown in Fig. 5, the pitch time represents a period from certain thread cutting to next thread cutting. In the example of Fig. 5, at a time t1, a sewing work is completed through works carried out till that time and the thread cutting is thus performed. Subsequently, an operator puts a cloth subjected to the completion of the sewing work from a sewing machine table to another table for a period from the time t1 to a time t2. Then, the operator takes the unsewn cloth and sets the cloth onto the sewing machine table for a period from the time t2 to a time t3. Thereafter, the operator carries out a sewing operation for a period from the time t3 to a time t4. Next, the cloth is taken and turned (that is, a sewing direction is changed) for a period from the time t4 to a time t5. Subsequently, the operator carries out a sewing operation for a period from the time t5 to a time t6. At the time t6, the thread cutting is performed. Thus, a single sewing work is carried out for a period of a pitch time 1 so that a single workpiece is obtained. Also at a pitch time 2, a single sewing operation is carried out so that a single workpiece is obtained by the same work as that in the pitch time 1.

In the example of Fig. 5, two sewing works are included in the pitch time 1. Accordingly, the number of in-process stitches in the pitch time 1 represents the number of times that a needle is moved "upward, downward and upward" in this order through two sewing works, that is, a total number of seams formed through the two sewing works. Although the number of sewing works included in the pitch time is two in the example of Fig. 5, it is a matter of course that the number of sewing works is not restricted thereto. The number of in-process stitches in the pitch time represents a sum of the number of sewing stitches in all the sewing works which are included in the pitch time.

[2] Embodiment

The embodiment according to the invention will be described below in detail with reference to the drawings.

[2 - 1] System Structure

Fig. 6 shows a whole configuration of a cooperating system of a plurality of sewing machines according to the embodiment.

In the cooperating system shown in Fig. 6, a plurality of sewing machines 10-1 to 10-10 is connected to a work analyzing apparatus 100 by a cable or wireless. The cooperating system of the plurality of sewing machines is provided in a sewing factory, for example. The sewing machines 10-1 to 10-10 constitute a sewing line as described in the paragraph of the background art. In other words, the sewing machines 10-1 to 10-10 include sewing machines having different sewing processes or sewing types. The sewing machines 10-1 to 10-10 cooperate with each other to obtain a single workpiece (for example, a suit of clothes). A thick arrow in the drawing indicates a flow of a sewing target 20.

Stitch number information S1-1 to S1-10 which are information about the number of stitches and thread cutting information S2-1 to S2-10 are input from the sewing machines 10-1 to 10-10 to the work analyzing apparatus 100. The work analyzing apparatus 100 classifieds a sewing process to be carried out by each sewing machine based on the information. Furthermore, the work analyzing apparatus 100 creates a pitch diagram of each sewing machine by using a result of the classification and outputs the pitch diagram to a monitor or a printer. A manager can improve a work balance by seeing the displayed pitch diagram to check a balance of a sewing work time undertaken by each operator (or each sewing machine) and finding a sewing process (a so-called bottleneck process) having the longest sewing work time, and changing an allocation of the sewing process.

[2 - 2] Schematic configuration of Sewing Machine

With reference to Fig. 7, a schematic configuration of the sewing machine will be described briefly. The sewing machine 10 is roughly divided into a sewing machine body 11, a main shaft motor 12, a control box 13 and a pedal 14.

In the sewing machine body 11, a needle 16 is supported on a needle bar 15. A power switch 17 is turned ON, the main shaft motor 12 is rotated and the rotation is transmitted to a main shaft of the sewing machine through a belt 18 so that the needle 16 carries out a vertical motion. A cloth feeding portion 19 feeds a cloth at a predetermined pitch corresponding to the vertical motion of the needle 16 so that a sewing operation is carried out. A start, an end and a speed of the sewing operation are controlled depending on an operation of the pedal 14. A sewing machine control device for controlling the sewing operation of the sewing machine 10 is provided in the control box 13. Moreover, the control box 13 has a communicating function for communicating with an external device such as the work analyzing apparatus 100.

The sewing machine 10 is controlled by the sewing machine control device accommodated in the control box 13. When the pedal 14 is operated, moreover, the main shaft motor 12 is rotated so that needle handling is started and the cloth feeding portion 19 starts a cloth feeding operation at a predetermined pitch. Thus, the sewing operation is carried out.

When the sewing operation is ended so that the pedal 14 is caused to carry out a thread cutting operation by an operator (for example, the pedal 14 is stepped back toward the operator's side), a thread cutting control signal for giving an instruction for cutting a thread is sent from the sewing machine control device provided in the control box 13 to a thread cutting portion (not shown) disposed below the cloth feeding portion 19 so that a needle thread and a bobbin thread are cut through the thread cutting portion. At the same time, the thread cutting control signal is output as thread cutting information S2 to an outside (the work analyzing apparatus 100) by the communicating function.

Moreover, the sewing machine 10 inputs stitch number information, which is information about the number of stitches, to the control box 13. It is possible to obtain the stitch number information by detecting the rotation of the main shaft motor 12, for example. Moreover, it is also possible to obtain the stitch number information by counting a detection signal sent from a sensor for detecting a vertical motion of a needle. Stitch number information S1 is transmitted from the control box 13 to the work analyzing apparatus 100 by a cable or wireless.

[2 - 3] Configuration of Work Analyzing Apparatus

Fig. 8 shows an example of a configuration of the work analyzing apparatus 100 of a sewing machine according to the embodiment. Respective functional blocks of Fig. 8 are typically implemented as a large-scale integration (LSI) circuit to be an integrated circuit. These may be formed into a single chip individually or into a single chip to include a part or all of the functional blocks.

The work analyzing apparatus 100 of Fig. 8 is connected to "n" sewing machines, and stitch number information S1-1 to S1-n and thread cutting information S2-1 to S2-n are input from the "n" sewing machines thereto.

The work analyzing apparatus 100 inputs the thread cutting information S2-1 to S2-n from the respective sewing machines to a thread cutting information receiving portion 101. Moreover, the work analyzing apparatus 100 inputs the stitch number information S1-1 to S1-n from the respective sewing machines to a stitch length receiving portion 102a.

The thread cutting information receiving portion 101 exactly outputs the thread cutting information S2-1 to S2-n which are input. The stitch length receiving portion 102a exactly outputs the stitch number information S1-1 to S1-n.

The in-process stitch length information creating portion 102b inputs the stitch number information S1-1 to S1-n which are output from the stitch length receiving portion 102a, and furthermore, inputs the thread cutting information S2-1 to S2-n which are output from the thread cutting information receiving portion 101, and thus obtains the number of stitches in a single process (for a pitch time period) from thread cutting to next thread cutting in each sewing machine. The in-process stitch length information creating portion 102b outputs, as in-process stitch number information S1-1' to S1-n', the number of stitches for the pitch time period which is obtained for each sewing machine.

The process determining portion 103 inputs the in-process stitch number information S1-1' to S1-n' and classifies a sewing process carried out in each sewing machine based on the in-process stitch number information S1-1' to S1-n'. The process determining portion 103 outputs sewing process information S3-1 to S3-n to be a result of the classification. More specifically, the process determining portion 103 classifies the sewing process from the number of stitches based on the principle that the number of stitches is equal if the sewing process is identical and the number of stitches is different if the sewing process is different as described in the paragraph [1] Principle. It is preferable to predetermine a tolerance of the number of stitches and to determine that the sewing process is identical if a difference in the number of stitches is within the tolerance. The process determining portion 103 outputs, as sewing process information S3-1 to S3-n, a sewing process ID classified for each swing machine.

The process determining portion 103 has a corresponding table 104 indicative of a corresponding relationship between the number of stitches and a type of a sewing process, and classifies a sewing process to be carried out by each sewing machine from the number of stitches in the sewing machine and outputs the sewing process by using the table. Consequently, it is possible to determine the sewing process corresponding to the number of stitches with a simple structure.

A sewn cloth number information receiving portion 106 inputs the thread cutting information S2-1 to S2-n and the in-process stitch number information S1-1' to S1-n', and uses the information to receive information S4-1 to S4-n about the number of sewn cloths for each of the number of in-process stitches in relation to each sewing machine. The processing will be described below with reference to Fig. 10.

A pitch time calculating portion 105 inputs the thread cutting information S2-1 to S2-n and the sewing process information S3-1 to S3-n and uses the information to obtain pitch times S5-1 to S5-n indicative of a time required from thread cutting to next thread cutting in each sewing machine every sewing process. The processing will be described below with reference to Fig. 10.

A rate calculating portion 107 inputs sewing process information S3 and information S4 about the number of sewn cloths for each of the number of in-process stitches and calculates work rates S6-1 to S6-n indicative of a rate at which a work of a sewing process of an identical type is distributed to each sewing machine based on the information. The processing will be described below with reference to Figs. 12 to 18.

A pitch diagram creating portion 108 inputs the sewing process information S3, the pitch times S5-1 to S5-n, and the work rates S6-1 to S6-n and uses the pitch times and work rates to create a pitch diagram S7. The pitch diagram S7 is transmitted to a display portion. Since the method of creating the pitch diagram has already been described with reference to Fig. 2 and is the well-known technique, description will be omitted.

[2 - 4] Classification of Sewing Process and Creation of Pitch Diagram

Next, the classification of the sewing process through the work analyzing apparatus 100 and the creation of the pitch diagram will be described in detail by taking a specific example.

As shown in Fig. 9, the work analyzing apparatus 100 receives information about <1> a sewing type, <2> the number of in-process stitches and <3> a work time from each sewing machine through a network in relation to a sewing machine ID and an operator ID. Each data are partitioned through thread cutting.

<1> The sewing type includes a lockstitch, a lock, a single chain stitch, a double chain stitch and a decorative stitch. In the invention, even if information about the sewing type is not used, it is possible to classify a sewing process and to create a pitch diagram. Therefore, a flow of the information is not shown in Fig. 8.

<2> The number of in-process stitches indicates the number of stitches within a single process from thread cutting to next thread cutting.

<3> The work time indicates a time from thread cutting to next thread cutting.

Figs. 10A to 10D are charts showing images of a way for classifying a sewing process based on the number of in-process stitches and a method of obtaining a pitch time.

As shown in Fig. 10A, the work analyzing apparatus 100 classifies a process from the number of in-process stitches for each sewing machine. It is preferable that a tolerance of the number of in-process stitches to be determined as the same sewing process should be varied depending on the sewing type. For example, it is determined that ± five stitches are set to be the tolerance in case of the lockstitch and the sewing process is identical if a difference in the number of in-process stitches is within the range. On the other hand, for example, the tolerance is set to be ±20 stitches in the lock. The number of in-process stitches having the number of sewing works corresponding to the number of in-process stitches (which is also referred to as the number of sewn cloths or the number of sewing operations) of 3% or less as a whole is classified as an abnormal work (an abnormal stitch).

Fig. 10B is a chart showing a distribution of a pitch time in which the number of in-process stitches corresponds to 50 stitches, Fig. 10C is a chart showing a distribution of a pitch time in which the number of in-process stitches corresponds to 100 stitches, and Fig. 10D is a chart showing a distribution of a pitch time in which the number of in-process stitches corresponds to 200 stitches.

The pitch time calculating portion calculates a pitch time having the greatest frequency distribution as a pitch time of each sewing process based on the distribution of the pitch time for each sewing process shown in Figs. 10B, 10C and 10D. The invention is not restricted to the above-mentioned way for obtaining a pitch time but the pitch time may be obtained through an average calculation for each of Figs. 10B, 10C and 10D, for example.

Fig. 11 shows data obtained after the sewing process is classified based on the number of in-process stitches and the pitch time is further calculated.

In Fig. 11, a process ID for a manager, a classified process ID and a rate have the following meaning.

The process ID for a manager indicates a process name to be used in a process allocation. In the case that a product is manufactured in an actual sewing line, a sewing process is first divided into a sewing machine (operator) unit or more and the sewing process thus divided is allocated to each sewing machine (operator) of the sewing line. Accordingly, a sewing machine (an operator) for carrying out the process can be specified based on the process ID for a manager. The process allocation represents the allocation described above.

The process ID indicates a sewing process name in which a sewing work from thread cutting to next thread cutting that is collected from a sewing machine is classified by the number of in-process stitches. An identical process is set to have an identical process ID, and a different process is set to have a different process ID. In Figs. 12 to 16, in the case that there is a possibility that the process might be identical, an identical process ID is set and a mark of "?" is added to a back of the process ID.

The rate indicates a work rate in the case that a sewing work is carried out by using plural sewing machines (operators) in an identical process. In case of a process (a single working process) in which a concurrent work is not carried out by means of the plural sewing machines (operators), 100% is obtained. In case of a process in which the concurrent work is carried out by means of the plural sewing machines (operators), a total of the rates is 100%.

In order to create a pitch diagram based on data shown in Fig. 11, it is necessary to specify whether the process is a single sewing process to be carried out by a single one of the plural sewing machines connected to the work analyzing apparatus 100 or a concurrent sewing process to be carried out by the plural sewing machines (operators). If an identical sewing process (the concurrent sewing process) is carried out by the plural sewing machines (operators), moreover, it is necessary to specify a rate at which the respective sewing machines (operators) carry out the sewing work.

As described above, the pitch diagram can be created if all of a "classified process ID" column and a "rate" column in Fig. 11 are filled in. A method of filling in the two columns will be described below. Consequently, a method of creating a pitch diagram according to the embodiment will be described. In the following description, explanation will be particularly given by dividing characteristic respects into five items <1> to <5> in the embodiment.

<1> Description will be given with reference to Fig. 12. At a different process, a sewing type is different. There is a possibility that the sewing type might be identical in an identical process. In an example of Fig. 12, a sewing line has only one sewing machine for a "single chain stitch". Irrespective of the number of in-process stitches and the number of cloths, therefore, a sewing process for the sewing machine M4 is a single sewing process and the rate calculating portion calculates the rate to be 100%. Moreover, the sewing processes for the lockstitch sewing machines M1, M2 and M5 might be identical ("1?" in Fig. 12), the sewing processes for the lock sewing machines M3 and M6 might also be identical ("2?" in Fig. 12), and the processes for the lockstitch sewing machines M1, M2 and M5 and the processes for the lock sewing machines M3 and M6 are different ("1?" and "2?" in Fig. 12).

<2> Description will be given with reference to Fig. 13. In comparison between data of the number of stitches of the sewing processes which might be identical to each other, the single sewing process is carried out if there is no equal number of in-process stitches. There is a possibility that a sewing process having an equal number of in-process stitches might be identical. In an example of Fig. 13, a sewing process having 230 stitches in the number of in-process stitches of a sewing process "1?" which might be identical is a single process, and the rate calculating portion calculates the rate to be 100%. A sewing process having 100 stitches ± several % might be identical ("1?" in Fig. 13), a sewing process having 50 stitches ± several % might be identical ("4?" in Fig. 13), and the sewing process having 100 stitches ± several % and the sewing process having 50 stitches ± several % are different from each other ("1?" and "4?" in Fig. 13).

<3> Description will be given with reference to Fig. 14. In the case that "a process ID for a manager" is input, it is possible to specify any of the sewing machines (operators) through which the process is to be carried out. In the single sewing process to be carried out by means of one of the sewing machines in the input IDs, therefore, the rate is calculated to be 100% (process IDs 2 and 7 for a manager in Fig. 14). In the case that the process ID for a manager which is input is extended over the sewing machines, moreover, the sewing process is defined and the rate calculating portion 107 calculates a sewing rate from the number of sewn cloths (the process ID for a manager of 1 in Fig. 14). In the case that a single sewing machine undertakes a plurality of sewing processes, however, the process ID for a manager and data fetched from the sewing machine cannot be related to each other. Therefore, the sewing rate cannot be defined (the process ID for a manger of 3 or 4 in Fig. 14). If it is possible to determine whether the processes are identical to each other based on the number of in-process stitches or not, the sewing process is defined so that the sewing rate can also be defined based on the number of sewn cloths. In this connection, the input of the "process ID for a manager" is not essential. If the "process ID for a manager" is input, a decision can be made in more detail as compared with the definition of the sewing rate based on only the number of in-process stitches. Moreover, it is not necessary to input all of the process IDs for a manager.

<4> The number of products put into the sewing line is obtained from the number of produced cloths in the sewing process which is defined by the methods <1> to <3>. If there is no work in a process through the sewing machine (operator) in the middle, the number of the sewn cloths is almost equal. Therefore, the number of the products thus put in can be obtained through averaging. As in the case that symmetrical sewing processes are carried out, however, sewing processes having an equal number of in-process stitches are often performed by means of a single sewing machine. In these cases, it is determined that different sewing processes having the equal number of in-process stitches are carried out and the rate calculating portion 107 sets the rate to be 200% as shown in Fig. 15.

<5> Description will be given with reference to Fig. 16. In the case that a total sum of the numbers of sewn cloths in the processes which are determined to have a possibility of the identical sewing processes by the methods of <1> and <2> is almost equal to the number of products which is obtained by the method <4>, the sewing processes can be determined to be identical to each other and the rate calculating portion 107 calculates the rate from the number of sewn cloths.

By carrying out the processings of <1> to <5>, it is possible to fill in the "classified process ID" column and the "rate" column which are required for creating a pitch diagram.

It is preferable to display, on a display portion, the column which cannot be filled in through the execution of the processings <1> to <5> and to manually input the column by a manager. Figs. 17, 18A and 18B show the state. First of all, if it can be determined that the process might be identical, the process which might be identical is grouped in a color or a mark and is thus displayed as shown in Fig. 17. In Fig. 17, a process group shown in shading might be an identical process and has an undefined rate. As shown in Fig. 18A, the manager manually inputs a process ID to the column of the "classified process ID" so that the process is divided. As a result, the "rate" can be defined based on the number of the sewn cloths as shown in Fig. 18B.

Thus, there are obtained the "(classified) process ID" and the "rate" which are required for creating the pitch diagram, and the pitch diagram creating portion 108 creates a pitch diagram for each operator (sewing machine) shown in Fig. 19 based on the "process ID" and the "rate". Since the method of creating the pitch diagram based on the "(classified) process ID" and the "rate" has already been described with reference to Fig. 2 and is the well-known technique, description will be omitted.

[2 - 5] Advantage of Embodiment

As described above, according to the embodiment, there are provided the thread cutting information receiving portion 101 for receiving the thread cutting information S2-1 to S2-n indicating that the thread cutting is carried out in each sewing machine, the stitch length receiving portion 102a for receiving the stitch number information S1-1 to S1-n to be information about the number of stitches of each sewing machine from each sewing machine, the in-process stitch length information creating portion 102b for outputting the in-process stitch number information S1-1' to S1-n' to be information about the number of stitches in a single process (for a pitch time period) from thread cutting to next thread cutting of each sewing machine based on the stitch number information S1-1 to S1-n and the thread cutting information S2-1 to S2-n, and the process determining portion 103 for classifying the sewing process to be carried out by each sewing machine based on the in-process stitch number information S1-1' to S1-n' of each sewing machine which are received. Consequently, it is possible to precisely and easily classify the sewing process to be carried out by each sewing machine through an effective utilization of a signal output from the sewing machine.

In addition to the structure, moreover, there are provided the sewn cloth number information receiving portion 106 for receiving information about the number of sewn cloths every sewing stitch for each sewing machine, the rate calculating portion 107 for calculating a work rate indicative of a rate at which a work of a sewing process of an identical type is distributed to each sewing machine based on the number of sewing cloths in each sewing machine, the pitch time calculating portion 105 for obtaining a pitch time indicative of a time from thread cutting to next thread cutting in each sewing machine every classified sewing process by using a result of a classification of a sewing process and thread cutting information, and the pitch diagram creating portion 108 for creating a pitch diagram of each sewing machine by using a sewing process which is classified by the process determining portion 103 and is to be carried out by each sewing machine, a work rate to be distributed to each sewing machine, and a pitch time. Consequently, it is possible to create a precise pitch diagram even if the input of the process ID is reduced or omitted.

[2 - 6] Another Embodiment

Although the work analyzing apparatus and method of the sewing machine according to the invention has been used for creating a pitch diagram in the embodiment, the invention is not restricted thereto but can be widely applied to the case in which a sewing process of each sewing machine in a cooperating system of a plurality of sewing machines is classified. In other words, the basic configuration of the invention includes the thread cutting information receiving portion 101, the stitch length receiving portion 102a, the in-process stitch length information creating portion 102b and the process determining portion 103 in Fig. 8. In the case that the pitch diagram is not created, the pitch time calculating portion 105, the sewn cloth number information receiving portion 106, the rate calculating portion 107 and the pitch diagram creating portion 108 may be omitted.

Although the description has mainly been given to the case in which a sewing process is classified based on the number of stitches in the embodiment, moreover, it is also possible to classify a sewing process based on a stitch length in place of the number of stitches as described in the paragraph of the principle of [1].

Although the pitch time is defined to indicate a time required from thread cutting to next thread cutting in the embodiment, furthermore, the definition of the pitch time is not restricted thereto. The pitch time may be a period from the time t2 that an unsewn cloth is taken to the time t7 that a sewn cloth is put on in Fig. 5, for example. In brief, it is sufficient that the pitch time is a period (a cycle) capable of representing a single sewing work. If the time required from the thread cutting to the next thread cutting is defined to be the pitch time as in the embodiment, it is possible to easily obtain the pitch time, which is preferable.

Although the description has been given by taking, as an example, the case in which the invention is constituted by hardware in the embodiment, moreover, the invention can also be implemented in software.

[Industrial Applicability]

The invention is suitable for an application to the case in which a pitch diagram of a sewing line is created, for example.

## Claims

**1.** A work analyzing apparatus in a cooperating system of a plurality of sewing machines comprising:

a thread cutting information receiving portion connected to a plurality of sewing machines to receive, from each of the plurality of sewing machines, thread cutting information indicating that thread cutting is carried out by the respective sewing machines;

a stitch length receiving portion connected to the sewing machines to receive, from the respective sewing machines, information about a stitch length of sewing carried out by the respective sewing machines; **characterized by**

an in-process stitch length information creating portion for creating in-process stitch length information to be information about a stitch length in a single process from thread cutting to next thread cutting of the respective sewing machines based on the stitch length information and the thread cutting information; and

a process determining portion for classifying a sewing process carried out by the respective sewing machines based on the received in-process stitch length information.

2. The work analyzing apparatus according to claim 1, wherein the process determining portion includes a corresponding table indicative of a corresponding relationship between the in-process stitch length and a type of the sewing process, and is designed for determining the type of the sewing process carried out by the respective sewing machines based on the in-process stitch length by using the corresponding table.

3. The work analyzing apparatus according to claim 1 or claim 2, wherein the stitch length receiving portion is designed for receiving stitch number information to be information about the number of stitches from the respective sewing machines as the stitch length information,
the in-process stitch length information creating portion is designed for creating, as the in-process stitch length information, in-process stitch number information to be information about the number of stitches in a single process from thread cutting to next thread cutting in the respective sewing machines, and
the process determining portion is designed for classifying the sewing process in the respective sewing machines based on the in-process stitch number information.

4. The work analyzing apparatus according to any of claims 1 to 3, further comprising:

a sewn cloth number information receiving portion for receiving information about the number of sewn cloths every in-process stitch length for the respective sewing machines;
a rate calculating portion for calculating a work rate indicative of a rate at which a work of a sewing process of an identical type is distributed to the respective sewing machines based on the number of the sewn cloths in the respective sewing machines;
a pitch time calculating portion for obtaining a pitch time every classified sewing process by using a classification result of the sewing process and the thread cutting information; and
a pitch diagram creating portion for creating a pitch diagram of the respective sewing machines by using the sewing process which is classified by the process determining portion, the work rate to be distributed to the respective sewing machines and the pitch time.

## Patentansprüche

1. Arbeitsanalysevorrichtung in einem zusammenwirkenden System von einer Mehrzahl von Nähmaschinen, umfassend:

einen Fadenschneidinformationsempfangsbereich, welcher mit einer Mehrzahl von Nähmaschinen verbunden ist, um von jeder aus der Mehrzahl von Nähmaschinen Fadenschneidinformation zu empfangen,
welche anzeigt, dass ein Fadenschneiden von den jeweiligen Nähmaschinen ausgeführt wird;
einen Stichlängenempfangsbereich, welcher mit den Nähmaschinen verbunden ist, um von den jeweiligen Nähmaschinen Information über eine Stichlänge eines von den jeweiligen Nähmaschinen ausgeführten Nähvorgangs zu empfangen;
**gekennzeichnet durch**
einen Inprozess-Stichlängeninformationserzeugungsbereich zum Erzeugen von Inprozess-Stichlängeninformation, welche Information über eine Stichlänge in einem einzigen Prozess von einem Fadenschneiden zum nächsten Fadenschneiden der jeweiligen Nähmaschinen sein soll, basierend auf der Stichlängeninformation und der Fadenschneidinformation; und
einen Prozessbestimmungsbereich zum Klassifizieren eines von den jeweiligen Nähmaschinen ausgeführten Nähprozesses basierend auf der empfangenen Inprozess-Stichlängeninformation.

2. Arbeitsanalysevorrichtung nach Anspruch 1, wobei der Prozessbestimmungsbereich eine korrespondierende Tabelle umfasst, welche indikativ ist für eine korrespondierende Beziehung zwischen der Inprozess-Stichlänge und einem Typ des Nähprozesses, und ausgebildet ist zum Bestimmen des von den jeweiligen Nähmaschinen ausgeführten Typs des Nähprozesses basierend auf der Inprozess-Stichlänge unter Verwendung der korrespondierenden Tabelle.

3. Arbeitsanalysevorrichtung nach Anspruch 1 oder Anspruch 2, wobei
der Stichlängenempfangsbereich ausgebildet ist zum Empfang von Stichzahlinformation, welche Information über die Anzahl von Stichen sein soll, von den jeweiligen Nähmaschinen als Stichlängeninformation,
der Inprozess-Stichlängeninformationserzeugungsbereich ausgebildet ist zum Erzeugen - als Inprozess-Stichlängeninformation - von Inprozess-Stichzahlinformation, welche Information über die Anzahl von Stichen in einem einzigen Prozess von einem Fadenschneiden bis zum nächsten Fadenschneiden der jeweiligen Nähmaschinen sein soll, und wobei der Prozessbestimmungsbereich ausgebildet ist zum Klassifizieren des Nähprozesses der jeweiligen Nähmaschinen basierend auf der Inprozess-Stichzahlinformation.

**4.** Arbeitsanalysevorrichtung nach einem der Ansprüche 1 bis 3, ferner umfassend:

einen Stückzahlinformationsempfangsbereich für genähtes Nähgut zum Empfangen von Information über die Stückzahl genähten Nähguts je Inprozess-Stichlänge für die jeweiligen Nähmaschinen;
einen Rate-Berechnungsbereich zum Berechnen einer Arbeitsrate,
welche indikativ ist für eine Rate, mit welcher eine Arbeit eines Nähprozesses gleichen Typs auf die jeweiligen Nähmaschinen verteilt ist, basierend auf der Stückzahl genähten Nähguts der jeweiligen Nähmaschinen;
einen Pitch-Zeit-Berechnungsbereich zum Erhalt einer Pitch-Zeit je klassifizierten Nähprozess durch Verwendung eines Klassifizierungsresultats des Nähprozesses und der Fadenschneidinformation; und
einen Pitch-Diagramm-Erzeugungsbereich zum Erzeugen eines Pitch-Diagramms der jeweiligen Nähmaschinen durch Verwendung des Nähprozesses, welcher von dem Prozessbestimmungsbereich klassifiziert ist, der auf die jeweiligen Nähmaschinen zu verteilenden Arbeitsrate und der Pitch-Zeit.

## Revendications

**1.** Appareil d'analyse du travail dans un système coopératif d'une pluralité de machines à coudre comprenant :

une partie de réception d'informations de coupe de fil reliée à une pluralité de machines à coudre pour recevoir, de chacune de la pluralité de machines à coudre, des informations de coupe de fil indiquant qu'une coupe de fil est effectuée par les machines à coudre respectives ;
une partie de réception de longueur de point reliée aux machines à coudre pour recevoir, des machines à coudre respectives, des informations concernant une longueur de point d'une couture effectuée par les machines à coudre respectives ;
**caractérisé en ce qu'**il comprend
une partie de création d'informations de longueur de point en cours de processus destinée à créer des informations de longueur de point en cours de processus qui doivent être des informations concernant une longueur d'un point dans un seul processus allant d'une coupe de fil à une coupe de fil suivante des machines à coudre respectives en fonction des informations de longueur de point et des informations de coupe de fil ; et
une partie de détermination du processus destinée à classer un processus de couture effectué par les machines à coudre respectives en fonction des informations de longueur de point en cours de processus reçues.

**2.** Appareil d'analyse du travail selon la revendication 1, dans lequel la partie de détermination du processus comprend un tableau de correspondance indiquant une relation de correspondance entre la longueur de point en cours de processus et un type du processus de couture, et est conçue pour déterminer le type du processus de couture effectué par les machines à coudre respectives en fonction de la longueur de point en cours de processus en utilisant le tableau de correspondance.

**3.** Appareil d'analyse du travail selon la revendication 1 ou la revendication 2, dans lequel la partie de réception de longueur de point est conçue pour recevoir des informations de nombre de points qui doivent être des informations concernant le nombre de points provenant des machines à coudre respectives en tant qu'informations de la longueur de point,
la partie de création d'informations de longueur de point en cours de processus est conçue pour créer, en tant qu'informations de longueur de point en cours de processus, des informations de nombre de points en cours de processus qui doivent être des informations concernant le nombre de points dans un seul processus allant d'une coupe de fil à une coupe de fil suivante dans les machines à coudre respectives, et
la partie de détermination du processus est conçue pour classer le processus de couture des machines à coudre respectives en fonction des informations de nombre de points en cours de processus.

**4.** Appareil d'analyse du travail selon l'une quelconque des revendications 1 à 3, comprenant en outre :

une partie de réception d'informations de nombre de tissus cousus destinée à recevoir des informations concernant le nombre de tissus cousus à chaque longueur de point en cours de processus pour les machines à coudre respectives ;

une partie de calcul de vitesse destinée à calculer une vitesse de travail indiquant une vitesse à laquelle un travail d'un processus de couture d'un type identique est réparti entre les machines à coudre respectives en fonction du nombre des tissus cousus dans les machines à coudre respectives ;
une partie de calcul de durée du pas destinée à obtenir une durée du pas à chaque processus de couture classé en utilisant un résultat de classement du processus de couture et les informations de coupe de fil ; et
une partie de création de diagramme de pas destinée à créer un diagramme de pas des machines à coudre respectives en utilisant le processus de couture qui est classé par la partie détermination du processus, la vitesse de travail à répartir entre les machines à coudre respectives et la durée du pas.

*FIG. 1*

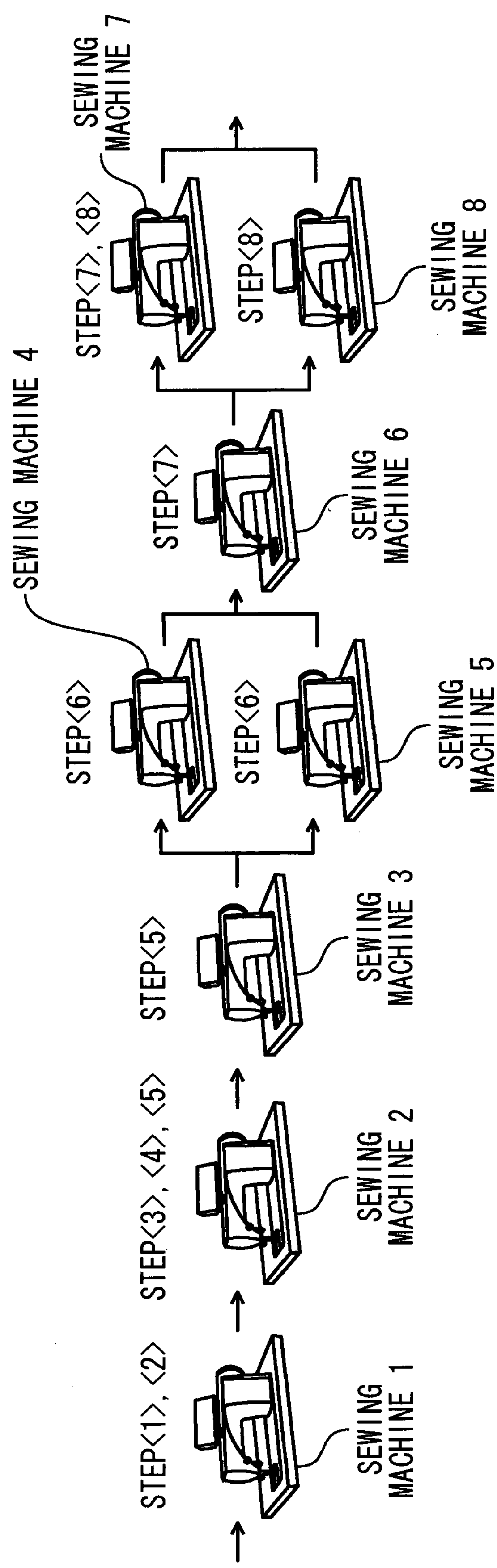
STEP⟨1⟩, ⟨2⟩
SEWING MACHINE 1
STEP⟨3⟩, ⟨4⟩, ⟨5⟩
SEWING MACHINE 2
STEP⟨5⟩
SEWING MACHINE 3
STEP⟨6⟩
SEWING MACHINE 4
STEP⟨6⟩
SEWING MACHINE 5
STEP⟨7⟩
SEWING MACHINE 6
STEP⟨7⟩, ⟨8⟩
SEWING MACHINE 7
STEP⟨8⟩
SEWING MACHINE 8

*FIG. 2*

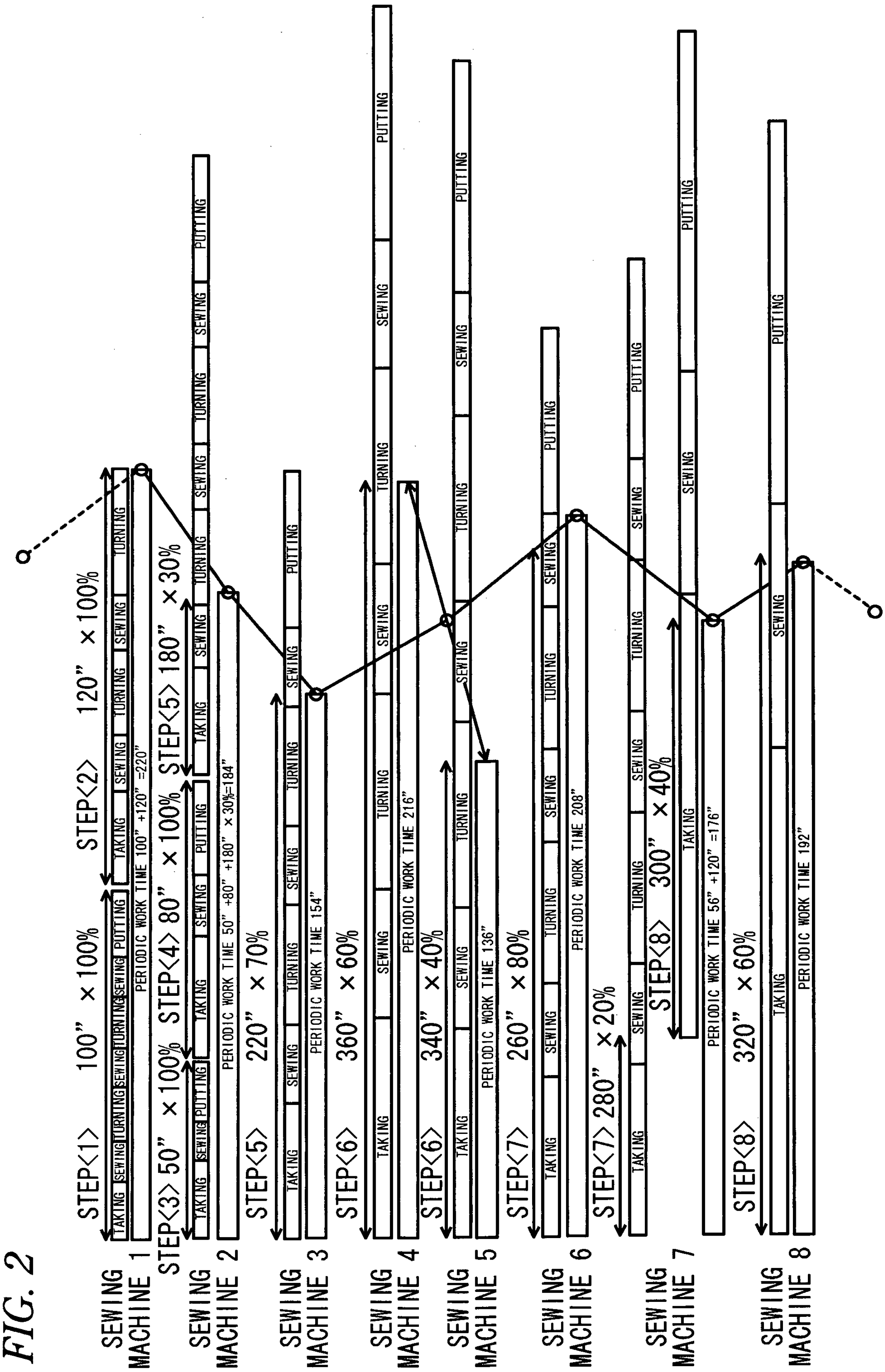
SEWING MACHINE 1
STEP⟨1⟩ 100” ×100%
STEP⟨2⟩ 120” ×100%
PERIODIC WORK TIME 100” +120” =220”
SEWING MACHINE 2
STEP⟨3⟩ 50” ×100%
STEP⟨4⟩ 80” ×100%
STEP⟨5⟩ 180” ×30%
PERIODIC WORK TIME 50” +80” +180” ×30%=184”
SEWING MACHINE 3
STEP⟨5⟩ 220” ×70%
PERIODIC WORK TIME 154”
SEWING MACHINE 4
STEP⟨6⟩ 360” ×60%
PERIODIC WORK TIME 216”
SEWING MACHINE 5
STEP⟨6⟩ 340” ×40%
PERIODIC WORK TIME 136”
SEWING MACHINE 6
STEP⟨7⟩ 260” ×80%
PERIODIC WORK TIME 208”
SEWING MACHINE 7
STEP⟨7⟩ 280” ×20%
STEP⟨8⟩ 300” ×40%
PERIODIC WORK TIME 56” +120” =176”
SEWING MACHINE 8
STEP⟨8⟩ 320” ×60%
PERIODIC WORK TIME 192”
TAKING
SEWING
TURNING
PUTTING

FIG. 3

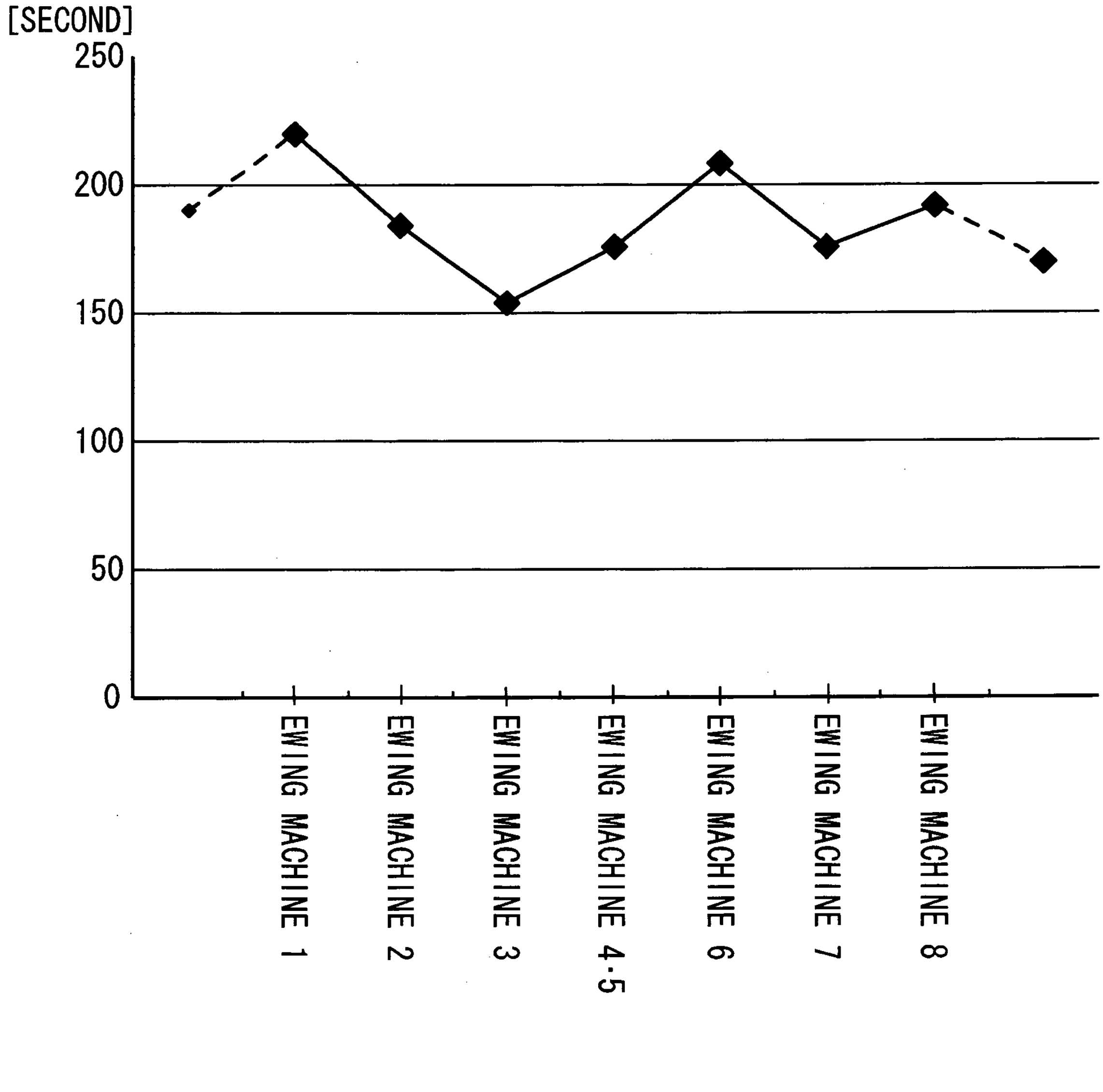
[SECOND]
250
200
150
100
50
0
EWING MACHINE 1
EWING MACHINE 2
EWING MACHINE 3
EWING MACHINE 4·5
EWING MACHINE 6
EWING MACHINE 7
EWING MACHINE 8

FIG. 4

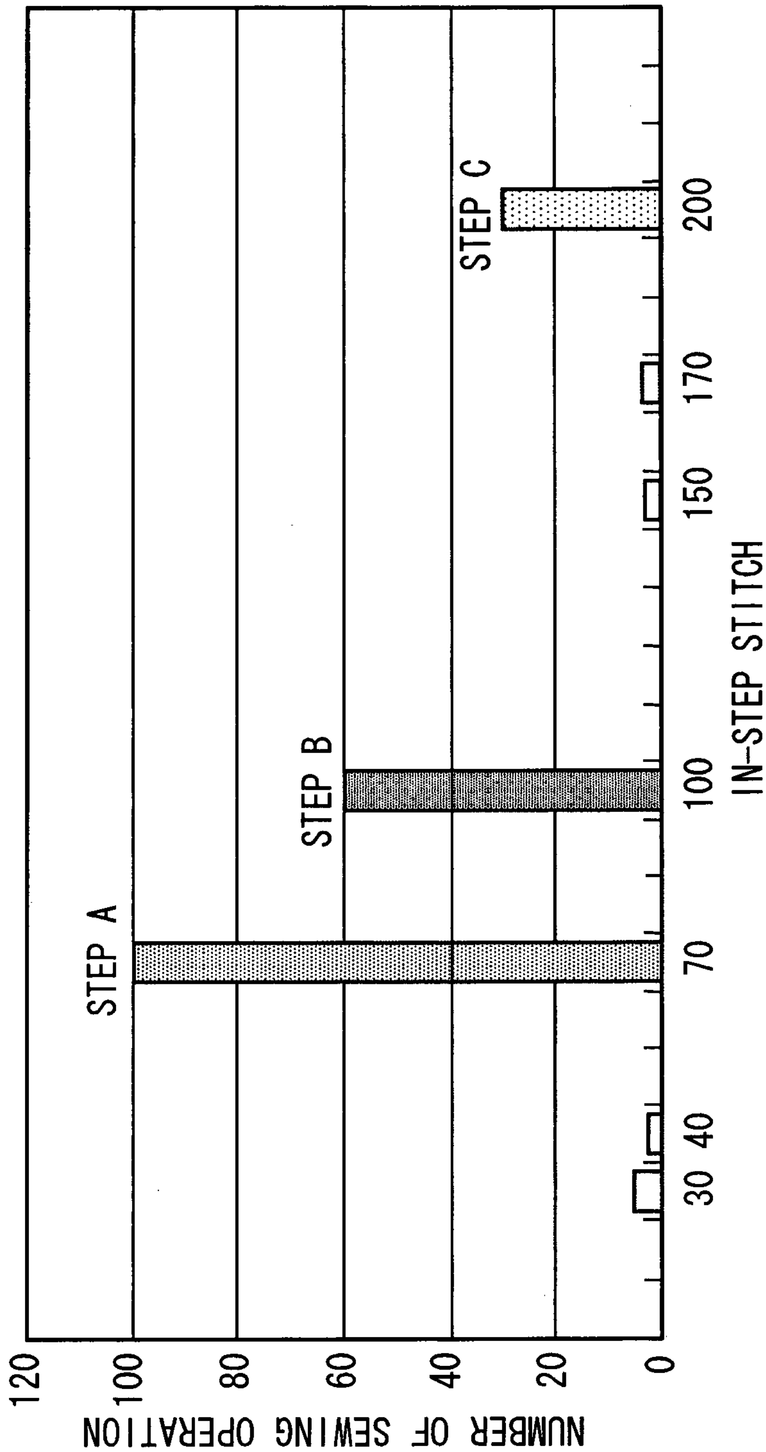
NUMBER OF SEWING OPERATION
120
100
80
60
40
20
0
STEP A
STEP B
STEP C
30
40
70
100
150
170
200
IN-STEP STITCH

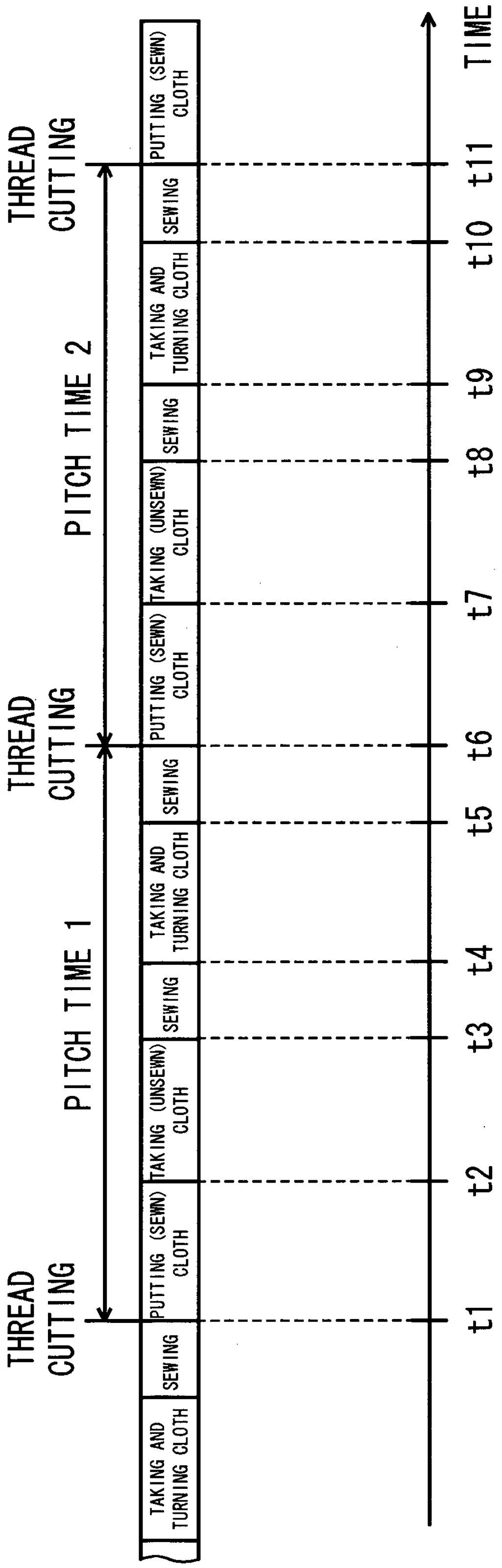
THREAD CUTTING
PITCH TIME 1
THREAD CUTTING
PITCH TIME 2
THREAD CUTTING
TAKING AND TURNING CLOTH
SEWING
PUTTING (SEWN) CLOTH
TAKING (UNSEWN) CLOTH
SEWING
TAKING AND TURNING CLOTH
SEWING
PUTTING (SEWN) CLOTH
TAKING (UNSEWN) CLOTH
SEWING
TAKING AND TURNING CLOTH
SEWING
PUTTING (SEWN) CLOTH
t1
t2
t3
t4
t5
t6
t7
t8
t9
t10
t11
TIME

FIG. 5

FIG. 6

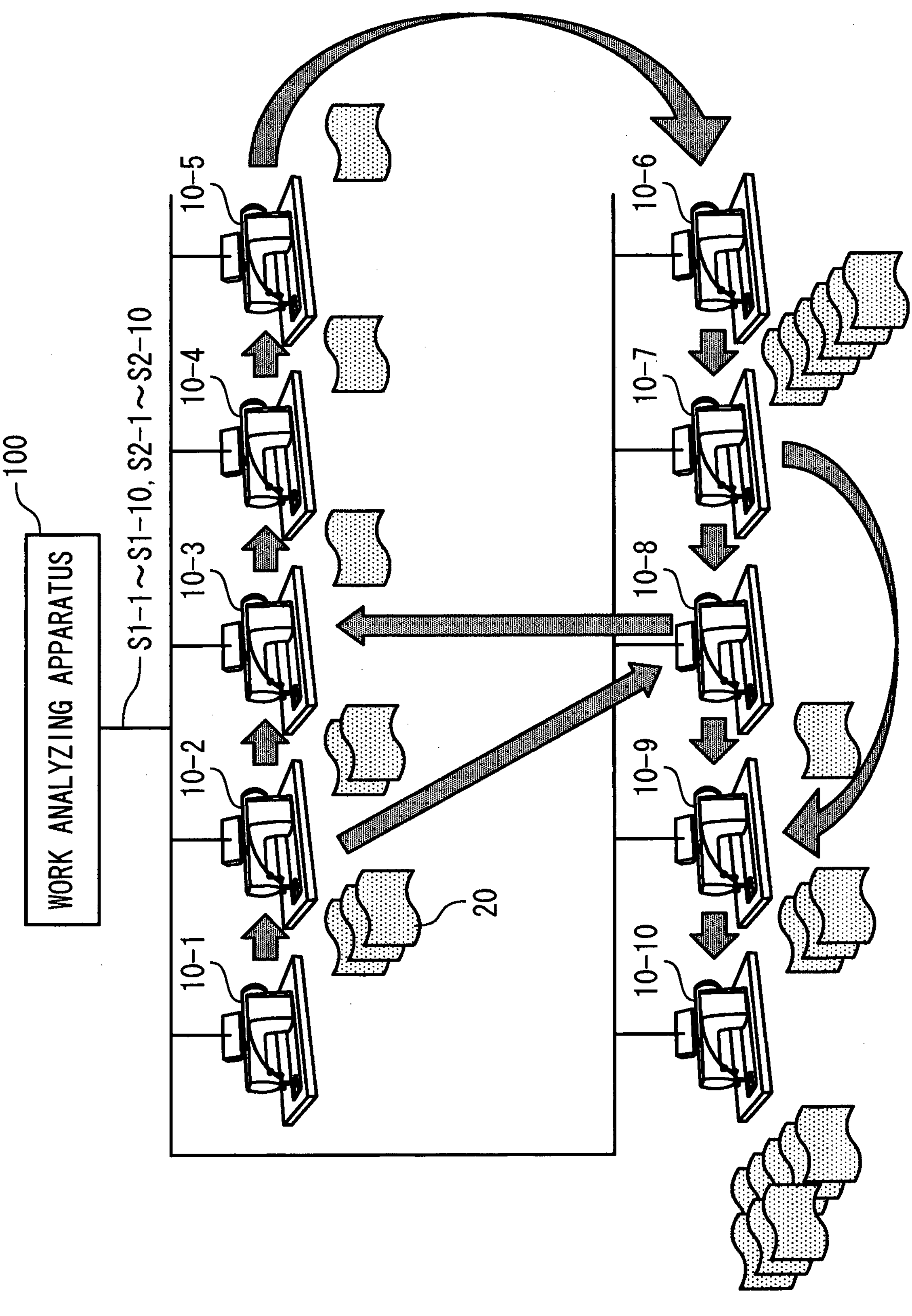
100
WORK ANALYZING APPARATUS
S1-1～S1-10, S2-1～S2-10
10-1
10-2
10-3
10-4
10-5
10-6
10-7
10-8
10-9
10-10
20

FIG. 7

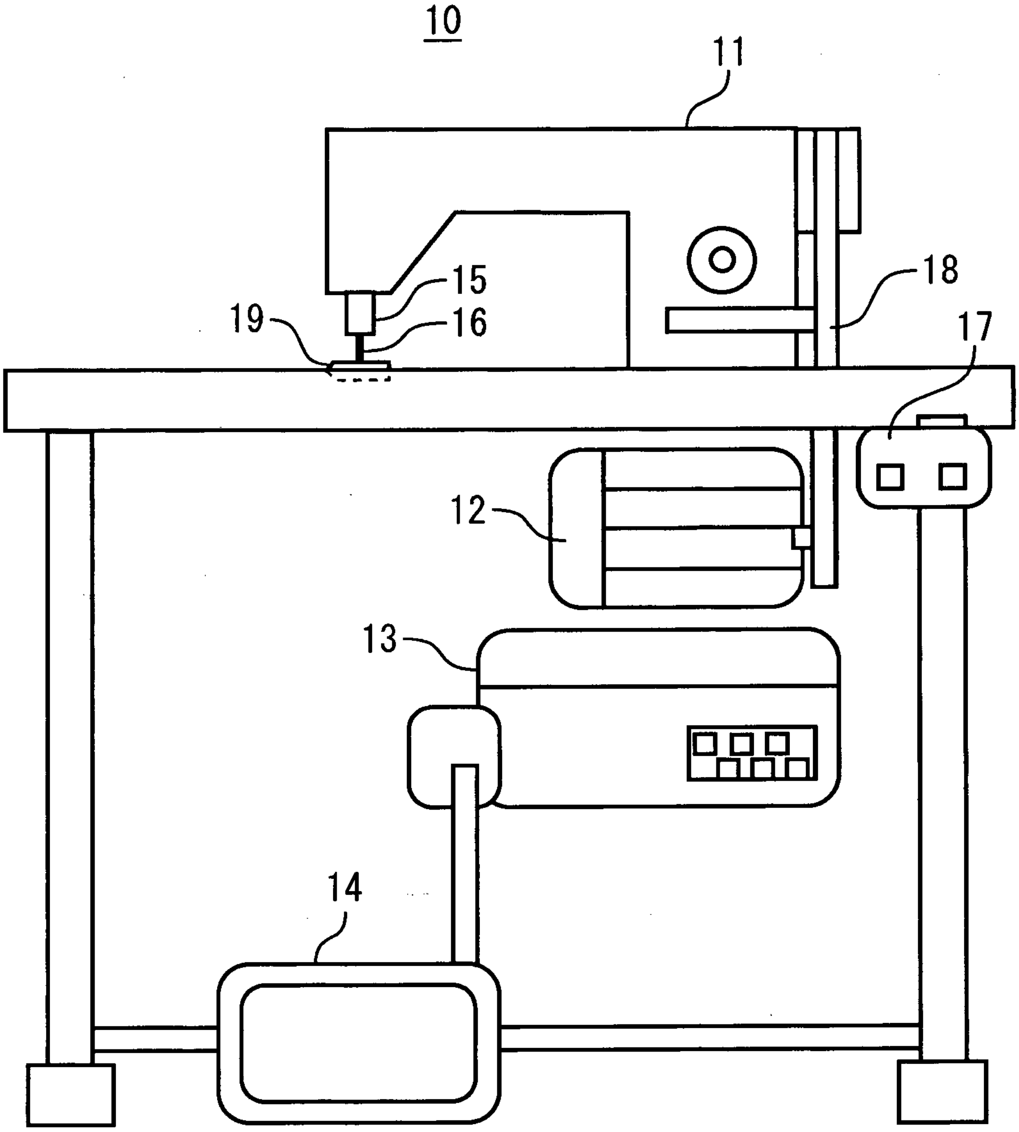

FIG. 8

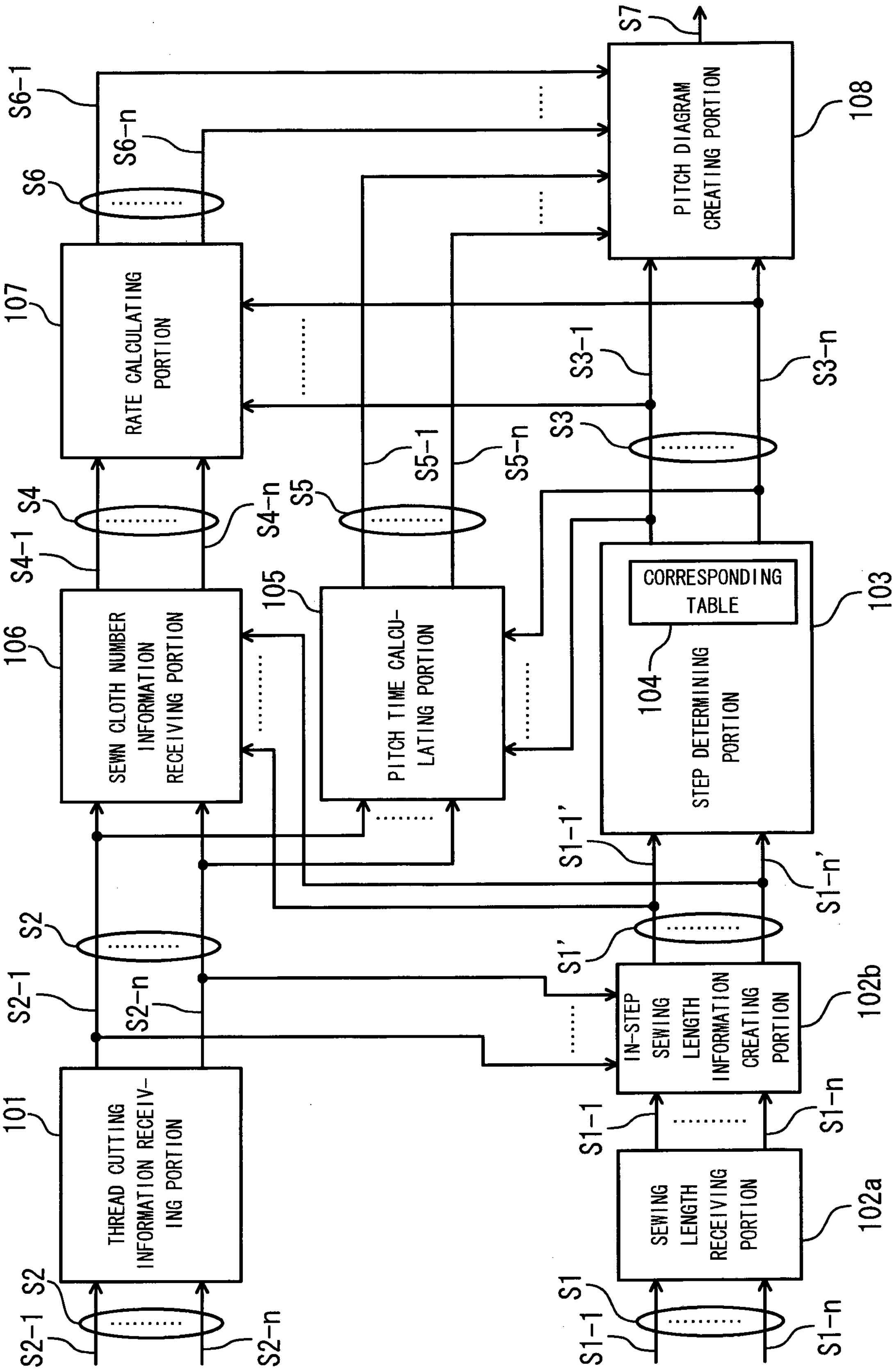
THREAD CUTTING INFORMATION RECEIVING PORTION
101
SEWING LENGTH RECEIVING PORTION
102a
IN-STEP SEWING LENGTH INFORMATION CREATING PORTION
102b
STEP DETERMINING PORTION
103
CORRESPONDING TABLE
104
PITCH TIME CALCULATING PORTION
105
SEWN CLOTH NUMBER INFORMATION RECEIVING PORTION
106
RATE CALCULATING PORTION
107
PITCH DIAGRAM CREATING PORTION
108
S1
S1-1
S1-n
S1'
S1-1'
S1-n'
S2
S2-1
S2-n
S3
S3-1
S3-n
S4
S4-1
S4-n
S5
S5-1
S5-n
S6
S6-1
S6-n
S7

FIG. 9

| SEWING MACHINE ID | OPERATOR ID | SEWING TYPE | IN-STEP STITCH | WORK TIME |
|---|---|---|---|---|
| M1 | OP1 | LOCKSTITCH | 100 | 200 |
| | | | 102 | 207 |
| | | | 100 | 300 |
| | | | 49 | 101 |
| | | | 51 | 105 |
| | | | 101 | 210 |
| | | | 201 | 300 |
| | | | 203 | 320 |
| | | | · | · |
| | | | · | · |
| | | | · | · |
| M2 | OP2 | LOCKSTITCH | 71 | 70 |
| | | | 72 | 73 |
| | | | 183 | 90 |
| | | | 69 | 75 |
| | | | 181 | 95 |
| | | | 180 | 89 |
| | | | 70 | 68 |
| | | | 71 | 70 |
| | | | · | · |
| | | | · | · |
| M3 | OP3 | SINGLE CHAIN STITCH | · | · |
| | | | · | · |
| | | | · | · |
| M4 | OP4 | LOCKSTITCH | · | · |
| | | | · | · |
| | | | · | · |
| | | | · | · |

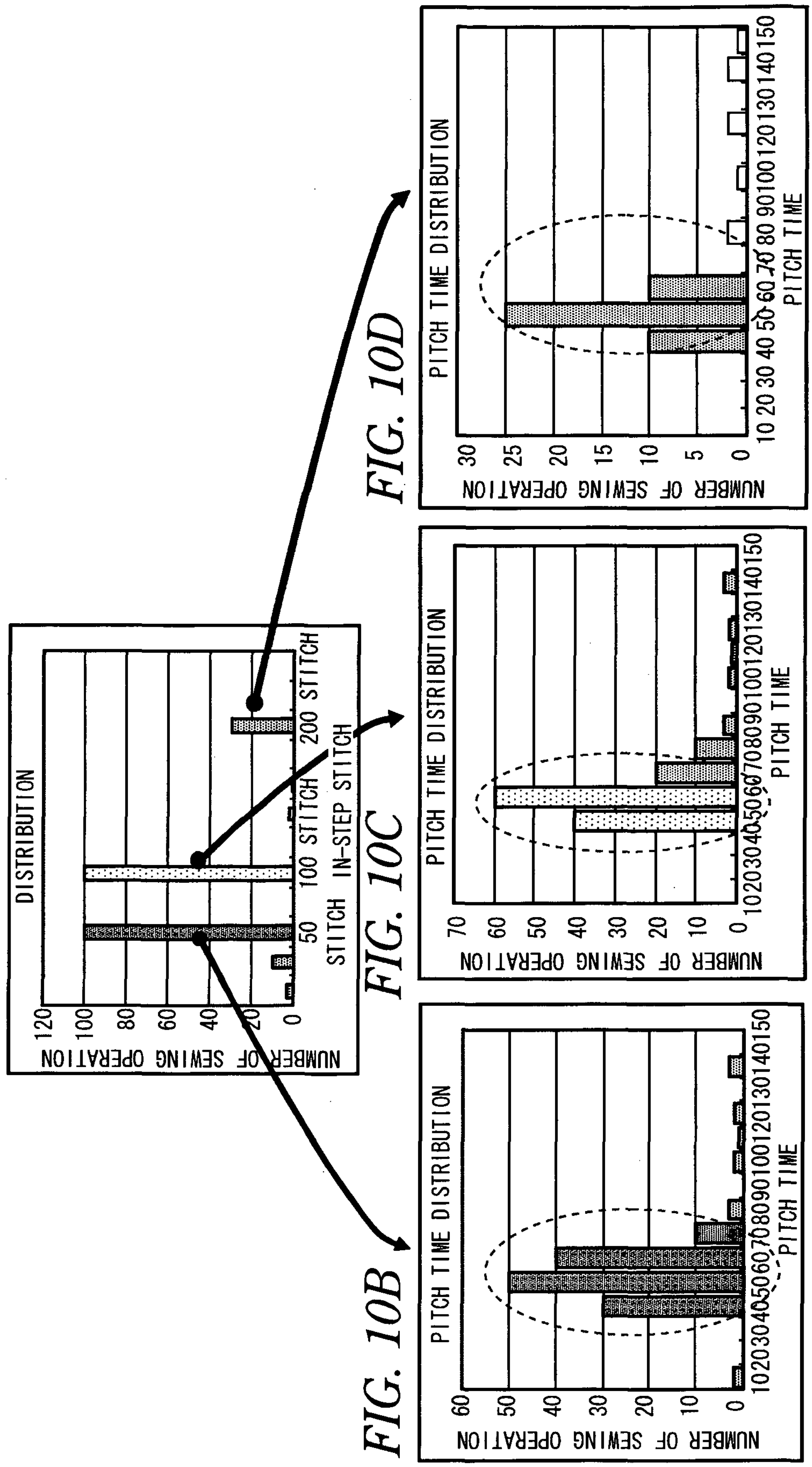


FIG. 10A

FIG. 10B

FIG. 10C

FIG. 10D

FIG. 11

| SEWING MACHINE ID | OPERATOR ID | SEWING TYPE | STEP ID FOR MANAGER | CLASSIFIED STEP ID | IN-STEP STITCH | NUMBER OF CLOTH (NUMBER OF TIME) | PITCH TIME | RATE |
|---|---|---|---|---|---|---|---|---|
| M1 | OP1 | LOCKSTITCH | | | 150 | 100 | 20 | |
| | | | | | 200 | 40 | 30 | |
| | | | | | 50 | 100 | 10 | |
| M2 | OP2 | LOCKSTITCH | | | 230 | 100 | 20 | |
| | | | | | 200 | 60 | 40 | |
| | | | | | 80 | 100 | 15 | |
| M3 | OP3 | LOCK | | | 500 | 100 | 100 | |
| M4 | OP4 | SINGLE CHAIN STITCH | | | 430 | 100 | 120 | |
| M5 | OP5 | LOCKSTITCH | | | 600 | 45 | 200 | |
| M6 | OP6 | LOCK | | | 600 | 55 | 170 | |

FIG. 12

| SEWING MACHINE ID | OPERATOR ID | SEWING TYPE | STEP ID FOR MANAGER | CLASSIFIED STEP ID | IN-STEP STITCH | NUMBER OF CLOTH (NUMBER OF TIME) | PITCH TIME | RATE |
|---|---|---|---|---|---|---|---|---|
| M1 | OP1 | LOCKSTITCH | | 1? | XXX | XXX | XXX | |
| | | | | 1? | XXX | XXX | XXX | |
| | | | | 1? | XXX | XXX | XXX | |
| | | | | 1? | XXX | XXX | XXX | |
| | | | | 1? | XXX | XXX | XXX | |
| M2 | OP2 | LOCKSTITCH | | 1? | XXX | XXX | XXX | |
| M3 | OP3 | LOCK | | 1?→2? | XXX | XXX | XXX | |
| M4 | OP4 | SINGLE CHAIN STITCH | | 1?→3 | XXX | XXX | XXX | 100% |
| M5 | OP5 | LOCKSTITCH | | 1? | XXX | XXX | XXX | |
| M6 | OP6 | LOCK | | 1?→2? | XXX | XXX | XXX | |

*FIG. 13*

| SEWING MACHINE ID | OPERATOR ID | SEWING TYPE | STEP ID FOR MANAGER | CLASSIFIED STEP ID | IN-STEP STITCH | NUMBER OF CLOTH (NUMBER OF TIME) | PITCH TIME | RATE |
|---|---|---|---|---|---|---|---|---|
| XXX | XXX | XXX | | 1? | 100 | XXX | XXX | |
| XXX | XXX | XXX | | 1?→3 | 230 | XXX | XXX | 100% |
| XXX | XXX | XXX | | 1? | 100 | XXX | XXX | |
| XXX | XXX | XXX | | 1? | 102 | XXX | XXX | |
| XXX | XXX | XXX | | 1?→4? | 50 | XXX | XXX | |
| XXX | XXX | XXX | | 1?→4? | 51 | XXX | XXX | |
| XXX | XXX | XXX | | 2? | 601 | XXX | XXX | |
| XXX | XXX | XXX | | 2? | 600 | XXX | XXX | |

*FIG. 14*

| SEWING MACHINE ID | OPERATOR ID | SEWING TYPE | STEP ID FOR MANAGER | CLASSIFIED STEP ID | IN-STEP STITCH | NUMBER OF CLOTH (NUMBER OF TIME) | PITCH TIME | RATE |
|---|---|---|---|---|---|---|---|---|
| XXX | OP4 | XXX | 1 | 1 | XXX | 60 | XXX | 60% |
| XXX | OP5 | XXX | 1 | 1 | XXX | 40 | XXX | 40% |
| XXX | XXX | XXX | 2 | XXX | XXX | XXX | XXX | 100% |
| | | | | XXX | XXX | XXX | XXX | 100% |
| | | | | XXX | XXX | XXX | XXX | 100% |
| XXX | XXX | XXX | 3 | XXX | 300 | 70 | XXX | 70% |
| XXX | XXX | XXX | 3 | XXX | 300 | 30 | XXX | 30% |
| | | | 4 | XXX | 150 | XXX | XXX | |
| XXX | XXX | XXX | 5? | XXX | XXX | XXX | XXX | 100% |
| | | | 5? | XXX | XXX | XXX | XXX | 100% |
| XXX | XXX | XXX | 7 | XXX | XXX | XXX | XXX | 100% |
| XXX | XXX | XXX | | XXX | XXX | 55 | XXX | 55% |
| XXX | XXX | XXX | | XXX | XXX | 45 | XXX | 45% |

FIG. 15

| SEWING MACHINE ID | OPERATOR ID | SEWING TYPE | STEP ID FOR MANAGER | CLASSIFIED STEP ID | IN-STEP STITCH | NUMBER OF CLOTH (NUMBER OF TIME) | PITCH TIME | RATE |
|---|---|---|---|---|---|---|---|---|
| XXX | XXX | XXX | | 1 | 100 | 102 | XXX | 100% |
| XXX | XXX | XXX | | 2 | 230 | 100 | XXX | 100% |
| XXX | XXX | XXX | | 3 | 70 | 200 | XXX | 100% →200% |
| XXX | XXX | XXX | | 4 | 400 | 40 | XXX | 40% |
| XXX | XXX | XXX | | 5 | 400 | 60 | XXX | 60% |
| XXX | XXX | XXX | | 6 | 450 | 99 | XXX | 100% |
| XXX | XXX | XXX | | 7 | 30 | 103 | XXX | 100% |

*FIG. 16*

| SEWING MACHINE ID | OPERATOR ID | SEWING TYPE | STEP ID FOR MANAGER | CLASSIFIED STEP ID | IN-STEP STITCH | NUMBER OF CLOTH (NUMBER OF TIME) | PITCH TIME | RATE |
|---|---|---|---|---|---|---|---|---|
| XXX | XXX | XXX | | 1?→1 | 100 | 30 | XXX | 30% |
| XXX | XXX | XXX | | 1?→1 | 100 | 35 | XXX | 35% |
| XXX | XXX | XXX | | 1?→1 | 102 | 35 | XXX | 35% |
| XXX | XXX | XXX | | 2 | 50 | 100 | XXX | 100% |
| XXX | XXX | XXX | | 3 | 51 | 101 | XXX | 100% |
| XXX | XXX | XXX | | 4 | 601 | 99 | XXX | 100% |
| XXX | XXX | XXX | | 5 | 600 | 103 | XXX | 100% |

*FIG. 17*

| SEWING MACHINE ID | OPERATOR ID | SEWING TYPE | STEP ID FOR MANAGER | CLASSIFIED STEP ID | IN-STEP STITCH | NUMBER OF CLOTH (NUMBER OF TIME) | PITCH TIME | RATE |
|---|---|---|---|---|---|---|---|---|
| MID001 | OPID001 | LOCKSTITCH | | A001 | 200 | 60 | 70 | 60% |
| MID002 | OPID002 | LOCKSTITCH | | A001 | 200 | 40 | 86 | 40% |
| MID003 | OPID003 | LOCKSTITCH | 2 | A002 | 130 | 100 | 40 | 100% |
| | | | | A003 | 76 | 100 | 32 | 100% |
| | | | | A004 | 55 | 100 | 41 | 100% |
| MID004 | OPID004 | LOCKSTITCH | | | 250 | 72 | 130 | |
| MID005 | OPID005 | LOCKSTITCH | | | 250 | 29 | 120 | |
| | | | | A005 | 90 | 100 | 71 | 100% |
| MID006 | OPID006 | LOCKSTITCH | | A006 | 170 | 100 | 99 | 100% |
| | | | | | 250 | 38 | 115 | |
| MID007 | OPID007 | LOCK | | A007 | 320 | 102 | 150 | 100% |
| MID008 | OPID008 | LOCKSTITCH | | | 250 | 63 | 140 | |
| MID009 | OPID009 | LOCKSTITCH | | A008 | 280 | 101 | 130 | 100% |

FIG. 18A

| SEWING MACHINE ID | OPERATOR ID | SEWING TYPE | STEP ID FOR MANAGER | CLASSIFIED STEP ID | IN-STEP STITCH | NUMBER OF CLOTH (NUMBER OF TIME) | PITCH TIME | RATE |
|---|---|---|---|---|---|---|---|---|
| MID001 | OPID001 | LOCKSTITCH | | A001 | 200 | 60 | 70 | 60% |
| MID002 | OPID002 | LOCKSTITCH | | A001 | 200 | 40 | 86 | 40% |
| MID003 | OPID003 | LOCKSTITCH | 2 | A002 | 130 | 100 | 40 | 100% |
| | | | | A003 | 76 | 100 | 32 | 100% |
| | | | | A004 | 55 | 100 | 41 | 100% |
| MID004 | OPID004 | LOCKSTITCH | | 1 | 250 | 72 | 130 | |
| MID005 | OPID005 | LOCKSTITCH | | 1 | 250 | 29 | 120 | |
| | | | | A005 | 90 | 100 | 71 | 100% |
| MID006 | OPID006 | LOCKSTITCH | | A006 | 170 | 100 | 99 | 100% |
| | | | | 2 | 250 | 38 | 115 | |
| MID007 | OPID007 | LOCK | | A007 | 320 | 102 | 150 | 100% |
| MID008 | OPID008 | LOCKSTITCH | | 2 | 250 | 63 | 140 | |
| MID009 | OPID009 | LOCKSTITCH | | A008 | 280 | 101 | 130 | 100% |

FIG. 18B

| SEWING MACHINE ID | OPERATOR ID | SEWING TYPE | STEP ID FOR MANAGER | CLASSIFIED STEP ID | IN-STEP STITCH | NUMBER OF CLOTH (NUMBER OF TIME) | PITCH TIME | RATE |
|---|---|---|---|---|---|---|---|---|
| MID001 | OPID001 | LOCKSTITCH | | A001 | 200 | 60 | 70 | 60% |
| MID002 | OPID002 | LOCKSTITCH | | A001 | 200 | 40 | 86 | 40% |
| MID003 | OPID003 | LOCKSTITCH | 2 | A002 | 130 | 100 | 40 | 100% |
| | | | | A003 | 76 | 100 | 32 | 100% |
| | | | | A004 | 55 | 100 | 41 | 100% |
| MID004 | OPID004 | LOCKSTITCH | | 1 | 250 | 72 | 130 | 71% |
| MID005 | OPID005 | LOCKSTITCH | | 1 | 250 | 29 | 120 | 29% |
| | | | | A005 | 90 | 100 | 71 | 100% |
| MID006 | OPID006 | LOCKSTITCH | | A006 | 170 | 100 | 99 | 100% |
| | | | | 2 | 250 | 38 | 115 | 38% |
| MID007 | OPID007 | LOCK | | A007 | 320 | 102 | 150 | 100% |
| MID008 | OPID008 | LOCKSTITCH | | 2 | 250 | 63 | 140 | 62% |
| MID009 | OPID009 | LOCKSTITCH | | A008 | 280 | 101 | 130 | 100% |

FIG. 19

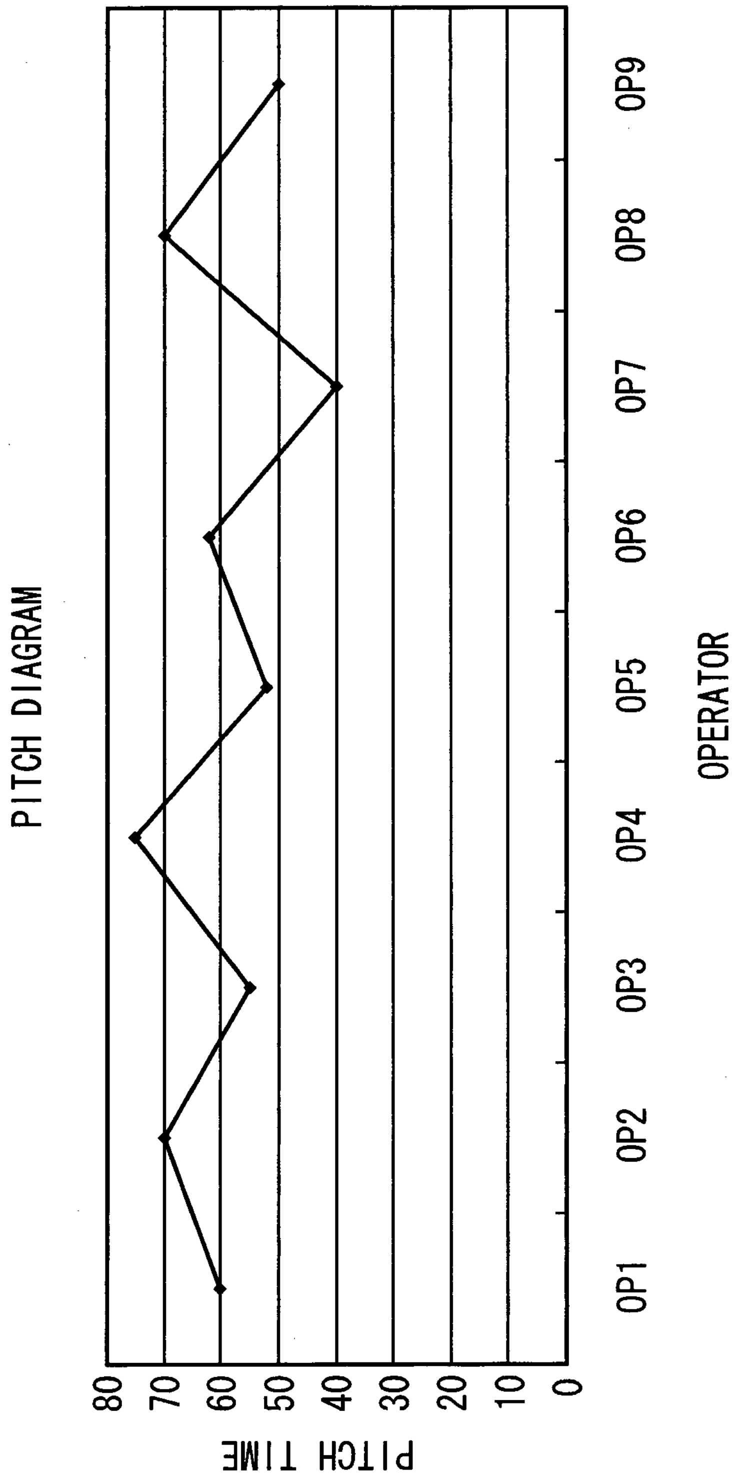
PITCH DIAGRAM
PITCH TIME
80
70
60
50
40
30
20
10
0
OP1
OP2
OP3
OP4
OP5
OP6
OP7
OP8
OP9
OPERATOR

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009160084 A